# EUROPÄISCHE PATENTSCHRIFT

(11) **EP 1 741 679 B1**
(45) Veröffentlichungstag und Bekanntmachung des Hinweises auf die Patenterteilung: **12.09.2012**
(21) Anmeldenummer: 06013968.0
(22) Anmeldetag: 05.07.2006
(51) Int. Cl.: C02F 3/12, C02F 1/68

(54) **Verfahren zur verbesserten Versorgung einer biologischen Kläranlagae mit Calcium und Magnesium**
Process for improving the supply of calcium and magnesium in biological wastewater treatment plant
Dispositif pour améliorer l'alimentation de calcium et magnésium dans une installation de traitement biologique d'eau usée

(30) Priorität: 06.07.2005 DE 102005031865
(43) Veröffentlichungstag der Anmeldung: 10.01.2007
(73) Patentinhaber: Schöndorfer, Peter, 83457 Bayerisch Gmain (DE)
(72) Erfinder: Schöndorfer, Peter, 83457 Bayerisch Gmain (DE); Wassermann, Carl D., 76229 Karlsruhe (DE); Krey, Friederike, 83435 Bad Reichenhall (DE)
(74) Vertreter: Schön, Christoph

(56) Entgegenhaltungen:
- EP-A- 0 695 722
- WO-A-95/26932
- DE-A1- 10 244 416
- FR-A1- 2 869 895
- GB-A- 684 607
- JP-A- 53 105 863
- JP-A- 2004 167 372
- JP-A- 2005 034 702
- HARTMAN M ET AL: "Predicting the rate of thermal decomposition of dolomite" CHEM ENG SCI; CHEMICAL ENGINEERING SCIENCE DEC 1996 PERGAMON PRESS INC, TARRYTOWN, NY, USA, Bd. 51, Nr. 23, Dezember 1996 (1996-12), Seiten 5229-5232, XP002483444
- THOMPSON G ET AL: "Bulking in activated sludge plants treating paper mill wastewaters", WATER RESEARCH, ELSEVIER, AMSTERDAM, NL, vol. 37, no. 11, 1 June 2003 (2003-06-01), pages 2636-2644, XP004424030, ISSN: 0043-1354

## Beschreibung

Die Erfindung betrifft ein Verfahren zur verbesserten Versorgung einer nach dem aeroben Belebtschlammverfahren betriebenen biologischen Kläranlage mit Calcium und Magnesium. Das erfindungsgemäße Verfahren führt zu einer Reduzierung oder Vermeidung der Bildung von Blähschlamm, Schwimmschlamm und Schaum. Gleichzeitig wird die Nitrifikation, die Hydraulik der Kläranlage und die Funktion des Faulturms stabilisiert.

Bei der biologischen Abwasserbehandlung nach dem aeroben Belebtschlammverfahren befindet sich in einem belüfteten Reaktionsbecken (Belebungsbecken) im Abwasser suspendierter Belebtschlamm, in dessen Flocken Mikroorganismen in Mischkulturen leben. Die Mikroorganismen, insbesondere Bakterien, sorgen für den Abbau von gelösten organischen Stoffen in den Abwässern. Sie wachsen und vermehren sich durch den Abbau der organischen Stoffe, wodurch zusätzliche Biomasse entsteht. In einem nachgeschalteten Sedimentationsbecken (Nachklärbecken) werden die Belebtschlammflocken sedimentiert, das gereinigte Abwasser in einem Überlauf abgezogen und ein Teil der abgetrennten Biomasse als Rücklaufschlamm in das Reaktionsbecken zurückgeführt.

Der Belebtschlamm besteht normalerweise aus unregelmäßig geformten Flocken zwischen 50 und 300 µm Durchmesser und einem spezifischen Gewicht > 1. Die Flocken bestehen einerseits aus den Mikroorganismen, insbesondere Bakterien, und andererseits aus organischen Ausscheidungsprodukten der Bakterien, i. w. Makromoleküle, wie Polysaccharide und Proteine, die auch extrazelluläre polymere Substanzen (EPS) genannt werden. Diese EPS bilden ein dreidimensionales gelartiges Netzwerk, welches die Bakterien zusammenhält und schützt. Für die Stabilität des Netzwerks sorgen eingelagerte anorganische Substanzen, wie Carbonate, Phosphate oder Metallhydroxide.

In modernen biologischen Kläranlagen mit zusätzlicher Stickstoffentfernung kommt es häufig zu Betriebsstörungen durch Bildung von Blähschlamm, Schwimmschlamm und/oder Schaum im Nachklärbecken. Insbesondere bei niedrigeren Temperaturen können sich die Absetzeigeneigenschaften des Belebtschlammes gravierend verschlechtern und im Extremfall zu einem Schlammabtrieb führen, welcher die Ablaufwerte des gereinigten Abwassers erheblich verschlechtert. Verantwortlich für die Absetzschwierigkeiten ist u.a. das vermehrte Auftreten fadenförmiger Bakterien, wodurch die Ausbildung kompakter Belebtschlammflocken erschwert bzw. verhindert wird. Zudem kann es zu Betriebsstörungen durch Spucken oder Schäumen des Faulturms kommen.

Nach dem Stand der Technik sind verschiedene Ansätze bekannt, um den Blähschlamm zu bekämpfen. Beispielsweise wird der flotierende Schlamm gemäß DE 102 62 031 B4 abgeschöpft. In einem anderen Ansatz wird der überproportionalen Vermehrung der Fadenbakterien durch mechanische Zerstörung der Zellstrukturen entgegengearbeitet, was entweder mittels Scherbeanspruchung des Schlamms (DE 101 55 161 A1) oder durch Ultraschallbehandlung (DE 198 43 862 A1) geschieht. Diese Maßnahmen bekämpfen jedoch nur die Symptome, nicht aber die Ursachen des Problems.

Weiterhin wird in DE 102 44 416 A1 der Einsatz von Polymetallhydroxiden, wie Polyaluminiumhydroxidchlorid, in Mischung mit einem positiv geladenen quartären Amin beschrieben. Hierbei sollen die Bedingungen für das Wachstum Flocken bildender Bakterien im Vergleich zu den Fadenbakterien begünstigt werden. Die Verwendung dieser Zusatzmittel ist allerdings mit erheblichen Mehrkosten verbunden.

Es ist bekannt, dass das so genannte Kalk-Kohlensäure-Gleichgewicht nicht nur in Verfahren zur (Trink-) Wasseraufbereitung eine wichtige Rolle spielt, sondern auch in der Abwasserreinigung. Alles deutet daraufhin, dass das übermäßige Wachstum der Fadenbakterien und die Bildung von Blähschlamm ursächlich auf ein gestörtes Kalk-Kohlensäure-Gleichgewicht zurück zu führen ist (Broschüre "Bekämpfung von Fadenbakterien", Kronos International Inc., Leverkusen, Kronos ecochem 2002, DS 2082D/10022D). Insbesondere durch gesteigerte Reinigungsleistungen der biologischen Kläranlagen wird dieses Gleichgewicht durch verstärkte Kohlensäureproduktion und Kohlensäureanreicherung (CO₂) massiv gestört. Dadurch erhöht sich der Anteil freier Kohlensäure im Belebtschlamm, wobei die Säurekapazität und der pH-Wert sinken. Das kalkaggressive Milieu führt zur Auflösung des die Flockenstruktur stabilisierenden Calciumcarbonats. Infolge des Mangels an Calciumcarbonat bricht die Flockenstruktur des Belebtschlammes zusammen, und die Absetzeigenschaften verschlechtern sich. Gleichzeitig ergibt sich ein Wachstumsvorteil für die fadenförmigen Bakterien gegenüber den übrigen Bakterien.

Mit einer Dosierung von Kalkhydrat direkt in das Belebtschlammbecken kann der pH-Wert angehoben und die Konzentration an freier Kohlensäure durch Bildung von CaCO₃ unmittelbar verringert werden (N. Weber: "Einsatz von Kalk auf biologischen Kläranlagen", wwt awt Wasserwirtschaft/Abwassertechnik 5, 2001, Seiten 23 bis 25; B. Oppermann et al.: "Stabilisierung der Biozönose in Abwasserreinigungsanlagen mit Kalk", ZKG International 5, 2005, Seiten 40 bis 46). Die DE 196 35 391 A1 beschreibt die Zugabe von Dolomitkalkhydrat in das Belebungsbecken. Die Dosierung des Kalks bzw. Dolomitkalkhydrats in den genannten Verfahren erfolgt pH-Wert-gesteuert entweder in trockener Form oder als Suspension. Beide Formen erfordern eine aufwändige Anlagen- und Regelungstechnik. Insbesondere beim Handling von Kalksuspension treten im Winter Probleme auf. Zudem vermerkt die DE 196 35 391 A1 einen signifikanten Mehranfall an Schlamm.

Die JP 2005-034702 A offenbart eine Flockungseinheit, die ein Rohr, aus dem Magnesiumionen eluiert werden können, umfasst, wobei mehrere Rohre gemeinsam zu einem Zylinder angeordnet sein können, durch die Abwasser hindurchfließt und beim Hindurchtreten Magnesiumionen eluiert, wodurch die Flockungswirkung der im Abwasser enthaltenen suspendierten Partikel erhöht wird.

Die JP 2004-167372 A beschreibt ein Flockungsverfahren, bei dem einem Abwasser Kationen zugeführt werden, um die Ausflockung der suspendierten Partikel zu verbessern. Vor Zugabe des Flockungsmittels, das Kationen erzeugt, wobei es sich bei dem Flockungsmittel um MgO, Mg(OH)₂, CaO, Ca(OH)₂, CaCO₃, Al, Al₂O₃ oder Al(OH)₃ handeln kann, wird das Abwasser über ein eine Ölkomponente enthaltendes Filter geführt.

Die GB 684 607 A beschreibt ein Verfahren zur Behandlung von Abwasser, bei dem ein Sauerstoff enthaltendes Gas und Calciumcarbonat in das Abwasser eingeleitet und eingemischt werden, worauf die gebildeten Feststoffe abgetrennt werden.

Die FR 2 869 895 A beschreibt ein Verfahren zum Behandeln von Belebtschlamm durch Einmischen eines pulverförmigen mineralischen Stoffs, bei dem es sich um Calcit, Dolomit oder Magnesit handeln kann, in mit Mikroorganismen behandeltes Abwasser zur Erhöhung der Ausflockung der Biomasse aus dem Abwasser.

Der Erfindung liegt somit die Aufgabe zugrunde, ein Verfahren anzugeben, dass neben den Symptomen vor allem langfristig die Ursachen des vermehrten Wachstums der Fadenbakterien und der Bildung von Blähschlamm, Schwimmschlamm und Schaum sowie der anderen oben genannten Ursachen für Störungen minimiert und zudem kostengünstig und in der täglichen Praxis einfach und wartungsarm zu betreiben ist.

Die Lösung dieser Aufgabe besteht in einem Verfahren zur Versorgung einer nach dem aeroben Belebtschlammverfahren betriebenen biologischen Abwasserreinigungsanlage mit Calcium und Magnesium, wobei ein Teilvoiumenstrom des Belebtschlamms durch einen Reaktor, der als Reaktorfüllmaterial calcium- und magnesiumhaltige Verbindungen enthält, geleitet und anschließend aus dem Reaktor heraus in das Belebtschlammbecken zurückgeführt wird, wobei der Gehalt an CaCO₃ der Belebtschlammflocke ansteigt und die Basenkapazität abnimmt, wobei das Reaktorfüllmaterial thermisch behandelter Dolomit ist, der 15 bis 30 Gew.-% MgO, 0 bis 21 Gew.-% MgCO₃, 0 bis 4 Gew.-% CaO und 63 bis 75 Gew.-% CaCO₃ enthält, wobei der Glühverlust 31 bis 39 Gew.-% beträgt. Weitere vorteilhafte Ausführungsformen der Erfindung sind in den Unteransprüchen beschrieben.

Beim erfindungsgemäßen Verfahren wird ein Teilvolumenstrom des Belebtschlammes, bevorzugt 1 bis 100 %, insbesondere 1 bis 20 %, des Zulaufvolumenstroms der Abwasserreinigungsanlage, an einer geeigneten Stelle dem Klärprozess entnommen und durch einen Reaktor geleitet. Der Reaktor enthält calcium- und magnesiumhaltige Verbindungen, die im folgenden als Reaktorfüllmaterial bezeichnet werden. Der in den Reaktor eingeleitete Teilvolumenstrom des Belebtschlamms wird mit dem Reaktorfüllmaterial in einen intensiven Kontakt gebracht. Die Durchleitung durch den Reaktor erfolgt vorzugsweise von unten nach oben, Anschließend wird der Belebtschlamm im freien Ablauf aus dem Reaktor heraus und in das Belebtschlammbecken zurück geführt.

Bei dem Reaktorfüllmaterial handelt es sich um thermisch behandelten Dolomit, der 15 bis 30 Gew-% MgO, 0 bis 21 Gew.-% MgCO₃, 0 bis 4 Gew.-% CaO und 63 bis 75 Gew.-% CaCO₃ enthält, wobei der Glühverlust 31 bis 39 Gew.-% beträgt. Bevorzugt enthält das Reaktorfüllmaterial 23 bis 28 Gew.-% MgO, 0 bis 8 Gew.-% MgCO₃, 0 bis 2 Gew.-% CaO und 67 bis 72 Gew-% CaCO₃, wobei der Glühverlust 31 bis 35 Gew.% beträgt.

Im Kontakt mit dem wässrigen Belebtschlamm kommt es zu einer Umwandlung der Inhaltsstoffe des Reaktorfüllmaterials zu Ca(OH)₂, Mg(OH)₂, Ca(HCO₃)₂, Mg(HCO₃)₂ sowie verwandten Verbindungen. Die Stoffe werden im Laufe der Betriebszeit vollständig gelöst und lagern sich in der Belebtschlammflocke an. Die Flockenstruktur wird dadurch stabilisiert, wobei der Gehalt an CaCO₃ der Flocke steigt. Auf diese Weise wird gezielt der Schlamm behandelt und in seiner Struktur stabilisiert. Die Bildung von Schwimmschlamm und Blähschlamm wird verhindert. Darüber hinaus können sich weitere Vertahrensvorteile einstellen, wie ein verbessertes Absetzverhalten im Nachklärbecken, eine Stabilisierung der Nitrifikation, ein Ausgasen der Kohlensäure im Faulturm ohne Schaumbildung oder Spucken.

Das Reaktorfüllmaterial liegt üblicherweise in einer Korngröße < 20 mm, bevorzugt 2 bis 12 mm, vor.

In einer Ausführungsform der Erfindung beträgt die Schütthöhe des Reaktorfüllmaterials 20 bis 500 cm, bevorzugt 60 bis 200 cm. Der Reaktor sollte gleichmäßig durchströmt werden. Ein gesicherter Betrieb ist insbesondere bei einer Beschickung des Reaktors mit 1 bis 30 m³, bevorzugt 5 bis 15 m³, Schlamm pro Stunde und m² Querschnittsfläche des Reaktors möglich. Anstelle eines einzigen Reaktors kann auch eine Serie von Reaktoren bzw. eine Reaktorkaskade eingesetzt werden.

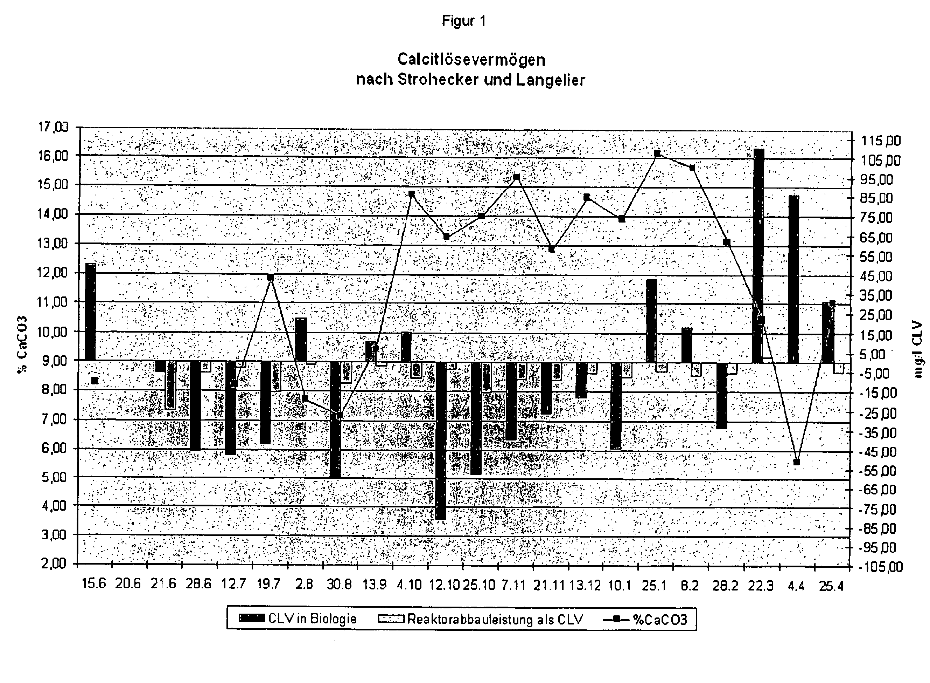

Die Durchleitung des Belebtschlamms durch den Reaktor gemäß dem erfindungsgemäßen Verfahren bewirkt, dass der Gehalt an CaCO₃ der Belebtschlammflocke deutlich ansteigt, während die freie Kohlensäure (Basenkapazität) abnimmt. In mehreren Langzeitversuchen in verschiedenen Kläranlagen konnte mit dem erfindungsgemäßen Verfahren der Gehalt an CaCO₃ der Belebtschiammflocke innerhalb von 4 Wochen etwa verdoppelt werden (siehe Figur 1), während die Menge an freier Kohlensäure gleichzeitig auf etwa 50% sank. Als Maß für die freie Kohlensäure wird das Calcitlösevermögen (CLV) nach Strohecker und Langier herangezogen. Das Calcitlösevermögen wird durch den Reaktor bis in den negativen Bereich verschoben (siehe Figur 1). Der Belebtschlamm wurde gezielt innerhalb kurzer Zeit mit Calciumcarbonat und Magnesiumcarbonat versorgt und die Bildung von Schwimmschlamm und Blähschlamm reduziert. Die Sichttiefe in der Nachklärung verbesserte sich deutlich, und die Hydraulik in den Kläranlagen wurde stabilisiert. Ferner wurde ein Schäumen oder Spucken der Faultürme unterbunden. Darüber hinaus konnte eine Steigerung des biologischen Abbaus von Stickstoff und Phosphat beobachtet werden.

Das erfindungsgemäße Verfahren bietet gegenüber den bekannten Verfahren zur Blähschlammreduzierung zahlreiche Vorteile:

Die kalkaggressive Kohlensäure wird neutralisiert. Durch die Dimensionierung des Reaktors und damit des Volumenstroms kann das Verhältnis der neutralisierten Kohlensäure zum Gesamtvolumen der Biomasse festgelegt werden.

Bei steigender Löslichkeit der Kohlensäure (sinkende Temperaturen) wird im gleichen Verhältnis mehr Kohlensäure neutralisiert, d.h. bei wechselnden Temperaturen arbeitet das Verfahren selbst regulierend.

Es kann keine Überdosierung oder Anreicherung erfolgen, da der Reaktor nach dem Gesetz des Kalk-Kohlensäure-Gleichgewichts immer nur das Gleichgewicht zwischen Kalk und Kohlensäure erreichen kann. Dadurch reduziert sich der Verbrauch des Reaktorfüllmaterials auf die Menge, die für die Lösung des Problems benötigt wird. Der Belebtschlamm wird weder unter- noch überversorgt, sondern ausreichend mit Calcium und Magnesium versorgt. Das Verfahren ist in Hinblick auf die positiven Effekte vergleichbar mit der bekannten Kalkdosierung, gleichzeitig aber einfacher, wobei die negativen Auswirkungen der Kalkdosierung (z.B. Stauben beim Handling von Kalk, Kalkablagerungen in den Leitungen) im Verlaufe der weiteren Schlammbehandlung vermieden werden. Zudem fällt kein zusätzliches Schlammvolumen an.

Der Gehalt an CaCO₃ der Belebtschlammflocke wird gezielt erhöht, so dass die Brückenbildung und die Vernetzung der EPS-Makromoleküle durch Calcium-Magnesium-lonen verbessert wird.

Der Reaktor muss nicht rückgespült werden, da durch die Beschickung von unten kein Zusetzen des Reaktors möglich ist.

Der Betrieb ist einfach und wartungsarm. Es muss lediglich der Befüllungsgrad mit dem Reaktorfüllmaterial gewährleistet sein, da das Material sich mit der Zeit verbraucht. Der Verbrauch ist abhängig von der neutralisierten Menge an Kohlensäure.

Die Erfindung wird nun anhand von Beispielen und der beigefügten Figur 1 weiter veranschaulicht.

### Beispiel 1

Ein Reaktor mit einem Volumen von 1 m³ wurde mit einem behandelten Dolomitgranulat befüllt. Das Dolomitgranulat hatte die folgende Zusammensetzung:

| | |
|---|---|
| mgO : | 25,3 Gew.-% |
| MgCO₃ : | 4,0 Gew.-% |
| CaO : | 0 Gew.-% |
| CaCO₃ : | 69,9 Gew.-%. |

Mit einer Pumpe, die eine Förderleistung von 8,5 m³/h aufwies, wurde Belebtschlamm aus der Biologie einer Kläranlage von unten in den Reaktor eingedüst. Bei der Kläranlage handelte es sich um ein System, das für 30000 Einwohnerwerte ausgelegt ist. Über einen Überlauf des Reaktors wurde der Belebtschlamm wieder zurück in die Biologie geführt.

Der durchschnittliche Trockenwetterzulauf der Kläranlage betrug etwa 2000 m³/Tag. Die Abwassermengen schwankten je nach Wetterlage zwischen 1800 m³/Tag bei Trockenwetter und 6000 m³/Tag bei Regenwetter. Mit der ausgewählten Pumpe, die eine Förderleistung von 8,5 m³/h aufwies, konnte ein Teilstromvolumen des Belebtschlamms durch den Reaktor von etwa 10% des Trockenwetterzulaufs der Kläranlage erreicht werden. Der Teilvolumenstrom des Belebtschlamms durch den Reaktor betrug 204 m³/Tag.

Das Beispiel 1 wurde in einem Zeitraum vom 15. Juni (15.6. in der Figur 1) bis zum 25. April (25.4. in der Figur 1) des folgenden Jahres ausgeführt. Dabei wurde das Calcitlösevermögen oder die Calcit-Sättigung, was im Weiteren als CLV abgekürzt wird, das Kalk-Kohlensäure-Gleichgewicht betreffend, verfolgt. Die Berechnung des CLV erfolgt durch die Berechnung des Sättigungs-pH-Wertes nach Strohecker und Langelier gemäß der DIN 38404 Teil 10 R 2. Zu Versuchsbeginn am 15. Juni (15.6. in der Figur 1) lag das CLV bei 49 mg/l. Dies ist in der Figur 1 auf der rechten Y-Achse abzulesen. Der Verlauf des Versuchs zeigt, dass der Reaktor das CLV auf negative Werte reduzieren konnte. Ein negatives Calcitlösevermögen bedeutet, dass nach dem Kalk-Kohlensäure-Gleichgewicht Calciumcarbonat abgeschieden wird. Dies zeigt, dass der Reaktor für diese Kläranlage ausreichend dimensioniert war.

Bei einem Ausfall der Pumpe über einen Zeitraum von drei Wochen vom 20. März (20.3.) bis 07. April (7.4.) zeigt sich in der Figur 1 ein deutliches Ansteigen des CLV in der Biologie. Erst nach Reparatur der Pumpe konnte die Verschlechterung ausgeglichen werden.

Direkt im Zusammenhang mit dem CLV steht der Prozentanteil von Calciumcarbonat (CaCO₃) auf der Belebtschlammflocke, siehe dazu die linke Y-Achse in der Figur 1. Dieser Wert steigt, wenn das CLV in der Biologie negativ ist, und fällt, wenn das CLV positiv ist.

Mit dem Beispiel 1 wurde gezeigt, dass der Prozentanteil von Calciumcarbonat (CaCO₃) auf der Belebtschlammflocke erhöht wurde. Regenwetter und kalte Abwassertemperaturen im Winter erhöhen das CLV. Im Beispiel 1 gab es im Zeitraum August lange Regenphasen, die das CLV in den positiven Bereich verschoben. Der direkte Einfluss auf den Calciumcarbonatgehalt ist deutlich erkennbar. Ebenso stieg das CLV mit kälter werdenden Temperaturen von Oktober bis Januar, blieb aber im negativen Bereich. Die wechselnden Bedingungen zwischen Januar und März mit Regen, Schneefall und Schneeschmelze konnte der Reaktor ausgleichen. Erst der oben beschriebene Ausfall der Pumpen Ende März ließ das CLV in der Biologie auf über 100 mg/l ansteigen, sodass der Calciumcarbonatgehalt auf der Belebtschlammflocke von etwa 15 % auf 5 % fiel. Bei der Anlage von Beispiel 1 wurde beobachtet, dass bei einem Calciumcarbonatgehalt von unter 4 % verstärkt Schwimmschlamm auftrat. Nach Reparatur der Pumpe konnte der Calciumcarbonatgehalt wieder auf über 10 % gesteigert werden.

Gemäß der Erfindung kann also in sehr kurzer Zeit eine schlechte Versorgung der Belebtschlammflocke mit Calcium und Magnesium verbessert und dadurch Blähschlamm-, Schwimmschlamm- und Schaumbildung reduziert bzw. vermindert werden.

Im Beispiel 1 wurde im Versuchszeitraum etwa 4 Tonnen/Jahr von dem behandelten Dolomitgranulat verbraucht. Es wurde fortlaufend vom Anlagenpersonal in den Reaktor gefüllt. Dabei wurde das Füllniveau durch das Nachfüllen auf dem gleichen Stand gehalten. Die Nachfüllmenge schwankte je nach Jahreszeit zwischen 50 kg pro Woche bis zu 100 kg pro Woche. Im Durchschnitt wurden 67 kg pro Woche nachgefüllt. Da sich das Verfahren über die Kohlensäure selbst regelt, ist der Verbrauch je nach Bedarf unterschiedlich. Die Kontrolle für das Verfahren war einfach, da mit einem Messstab einzig und allein der Füllstand zu kontrollieren war und bei einem zu geringen Füllstand einfach Reaktorfüllmaterial nachgefüllt wurde. Der einfache Aufbau und die einfache Wartung trägt vorteilhaft zur Vereinfachung eines Verfahrens zur Versorgung einer nach dem aeroben Belebtschlammverfahren betriebenen biologischen Abwasserreinigungsanlage mit Calcium und Magnesium bei.

Das im Beispiel 1 durchgeführte Verfahren wurde an vier weiteren Anlagen mit unterschiedlichen Zulaufbedingungen ausgeführt und führte zu ähnlichen Ergebnissen, wie sie im Beispiel 1 erhalten wurden und in der Figur 1 gezeigt sind.

## Patentansprüche

1. Verfahren zur Versorgung einer nach dem aeroben Belebtschlammverfahren betriebenen biologischen Abwasserreinigungsanlage mit Calcium und Magnesium, wobei ein Teilvolumenstrom des Belebtschlamms durch einen Reaktor, der als Reaktorfüllmaterial calcium-und magnesiumhaltige Verbindungen enthält, geleitet und anschließend aus dem Reaktor heraus in das Belebtschlammbecken zurückgeführt wird, wobei der Gehalt an CaCO₃ der Belebtschlammflocke ansteigt und die Basenkapazität abnimmt, wobei das Reaktorfüllmaterial thermisch behandelter Dolomit ist, der 15 bis 30 Gew.-% MgO, 0 bis 21 Gew.-% MgCO₃, 0 bis 4 Gew.-% CaO und 63 bis 75 Gew.-% CaCO₃ enthält, wobei der Glühverlust 31 bis 39 Gew.-% beträgt.

2. Verfahren nach Anspruch 1, **dadurch gekennzeichnet, dass** das Reaktorfüllmaterial eine Korngröße von < 20 mm, bevorzugt 2 bis 12 mm, aufweist.

3. Verfahren nach Anspruch 1 oder 2, **dadurch gekennzeichnet, dass** der Teilvolumenstrom des Belebtschlamms 1 bis 100 %, bevorzugt 1 bis 20 %, besonders bevorzugt 5 bis 15 %, des Zulaufvolumenstroms der Abwasserreinigungsanlage beträgt.

4. Verfahren nach einem oder mehreren der Ansprüche 1 bis 3, **dadurch gekennzeichnet, dass** der Belebtschlamm von unten durch den Reaktor geleitet wird.

5. Verfahren nach einem oder mehreren der Ansprüche 1 bis 4, **dadurch gekennzeichnet, dass** eine Serie von Reaktoren oder eine Reaktorkaskade verwendet wird.

6. Verfahren nach Anspruch 1, **dadurch gekennzeichnet, dass** das Reaktorfüllmaterial 23 bis 28 Gew.-% MgO, 0 bis 8 Gew.-% MgCO₃, 0 bis 2 Gew.-% CaO und 67 bis 72 Gew.-% CaCO₃ enthält und der Glühverlust 31 bis 35 Gew.-% beträgt.

7. Verfahren nach einem oder mehreren der Ansprüche 1 bis 6, **dadurch gekennzeichnet, dass** der Reaktor mit 1 bis 30 m³, bevorzugt 5 bis 15 m³, Schlammvolumen pro Stunde und pro m² Querschnittsfläche des Reaktors beschickt wird.

8. Verfahren nach einem oder mehreren der Ansprüche 1 bis 7, **dadurch gekennzeichnet, dass** die Schütthöhe des Reaktorfüllmaterials 20 bis 500 cm, bevorzugt 60 bis 200 cm, beträgt.

## Claims

1. Method for supplying calcium and magnesium to a biological sewage treatment plant which is operated according to the aerobic activated sludge process, wherein a partial volume flow of the activated sludge is directed through a reactor, which contains compounds containing calcium and magnesium as reactor filler, and subsequently directed back from the reactor into the activated sludge basin, the CaCO₃ content of the activated sludge flocs increasing and the base capacity decreasing, wherein the reactor filler is thermally treated dolomite, which contains 15 to 30 % by weight MgO, 0 to 21 % by weight MgCO₃, 0 to 4 % by weight CaO and 63 to 75 % by weight CaCO₃, the ignition loss being 31 to 39 % by weight.

2. Method according to claim 1, **characterised in that** the reactor filler has a particle size of < 20 mm, preferably 2 to 12 mm.

3. Method according to either claim 1 or claim 2, **characterised in that** the partial volume flow of the activated sludge is 1 to 100 %, preferably 1 to 20 %, particularly preferably 5 to 15 % of the volume flow supplied to the sewage treatment plant.

4. Method according to one or more of claims 1 to 3, **characterised in that** the activated sludge is directed through the reactor from below.

5. Method according to one or more of claims 1 to 4, **characterised in that** a series of reactors or a reactor cascade is used.

6. Method according to claim 1, **characterised in that** the reactor filler contains 23 to 28 % by weight MgO, 0 to 8 % by weight MgCO₃, 0 to 2 % by weight CaO and 67 to 72 % by weight CaCO₃, and the ignition loss is 31 to 35 % by weight.

7. Method according to any one or more of claims 1 to 6, **characterised in that** the reactor is charged with 1 to 30 m³, preferably 5 to 15 m³, sludge volume per hour and per m² of the cross-sectional area of the reactor.

8. Method according to any one or more of claims 1 to 7, **characterised in that** the fill height of the reactor filler is 20 to 500 cm, preferably 60 to 200 cm.

## Revendications

1. Procédé pour l'alimentation d'une installation d'épuration d'eaux résiduaires biologique fonctionnant selon le procédé aérobie aux boues activées avec du calcium et du magnésium, dans lequel un courant volumique partiel des boues activées est introduit à travers un réacteur qui contient comme matériau de charge du réacteur des composés contenant du calcium et du magnésium et est ensuite renvoyé à partir du réacteur dans le récipient des boues activées, dans lequel la teneur en CaCO₃ des flocons de boues activées augmente et la capacité des bases diminue, dans lequel le matériau de charge du réacteur est de la dolomite traitée thermiquement, qui contient de 15 à 30 % en masse de MgO, de 0 à 21 % en masse de MgCO₃, de 0 à 4 % en masse de CaO et de 63 à 75 % en masse de CaCO₃, dans lequel la perte par calcination est de 31 à 39 % en masse.

2. Procédé selon la revendication 1, **caractérisé en ce que** le matériau de charge du réacteur présente une taille de grain < 20 mm, de préférence de 2 à 12 mm.

3. Procédé selon la revendication 1 ou 2, **caractérisé en ce que** le courant volumique partiel des boues activées est de 1 à 100 %, de préférence de 1 à 20 %, encore mieux de 5 à 15 %, du courant volumique d'alimentation de l'installation d'épuration d'eaux résiduaires.

4. Procédé selon l'une ou plusieurs quelconques des revendications 1 à 3, **caractérisé en ce que** les boues activées sont introduites à travers le réacteur à partir du bas.

5. Procédé selon l'une ou plusieurs quelconques des revendications 1 à 4, **caractérisé en ce que** l'on utilise une série de réacteur ou une cascade de réacteurs.

6. Procédé selon la revendication 1, **caractérisé en ce que** le matériau de charge du réacteur contient de 23 à 28 % en masse de MgO, de 0 à 8 % en masse de MgCO₃, de 0 à 2 % en masse de CaO et de 67 à 72 % en masse de CaCO₃ et la perte par calcination est de 31 à 35 % en masse.

7. Procédé selon l'une ou plusieurs quelconques des revendications 1 à 6, **caractérisé en ce que** le réacteur est muni de 1 à 30 m³, de préférence de 5 à 15 m³, de volume de boues par heure et par m² de surface transversale du réacteur.

8. Procédé selon l'une ou plusieurs quelconques des revendications 1 à 7, **caractérisé en ce que** la hauteur de remblai du matériau de charge de réacteur est de 20 à 500 cm, de préférence de 60 à 200 cm.
